# EUROPEAN PATENT SPECIFICATION

(11) **EP 0 276 894 B1**
(45) Date of publication and mention of the grant of the patent: **10.02.1993**
(21) Application number: 88200137.3
(22) Date of filing: 27.01.1988
(51) Int. Cl.: C09J 103/02, C09J 109/08, C09J 113/02

(54) **Latex based adhesive composition for paperboard and corrugated board**
Klebstoff auf der Basis von Latex für Papier und Wellpappe
Composition adhésive à base de latex pour papier ou carton ondulé

(30) Priority: 27.01.1987 US 7223
(43) Date of publication of application: 03.08.1988
(73) Proprietor: THE DOW CHEMICAL COMPANY, Midland Michigan 48640-1967 (US)
(72) Inventor: Leadbetter, Arthur N., Midland Michigan 48640 (US); Galloway, James G., Midland Michigan 48640 (US)
(74) Representative: Smulders, Theodorus A.H.J., Ir.

(56) References cited:
- US-A- 4 396 453
- US-A- 4 508 869
- PATENT ABSTRACTS OF JAPAN, vol. 12, no. 159 (C-495)[3006], 14th May 1988, page 141 C 495; & JP-A-62 273 275 (TOPPAN PRINTING CO., LTD) 27-11-1987
- PATENT ABSTRACTS OF JAPAN, vol. 1, no. 26 (C-76), 26th March 1977, page 1053 C 76; & JP-A-51 135 934 (NIHON HAIBAKKU K.K.) 25-11-1976

## Description

Starch-based adhesives have been extensively employed for various adhesive applications especially in the area of paperboard and corrugated board. Generally, starch-based adhesives for corrugation are formulated from cooked or gelatinized starch and raw starch particles. The cooked starch increases viscosity and serves as a suspending agent for the raw starch particle. Heating the starch mixture results in gelation of the uncooked starch yielding higher viscosity and improved bonding characteristics.

A major consideration in the preparation of starch-based adhesives is the ultimate adhesive strength. One measurement of adhesive strength is pin strength. Pin strength is the force (measured in (kg) pounds) required to delaminate a liner board from the fluted medium in a corrugated board construction.

A further consideration with respect to pin strength is more particularly wet-pin strength. Wet-pin strength is the pin strength of a corrugated board construction after having been soaked in water. Where wet strength is important it is necessary for adhesives to have excellent adhesion under high humidity and wet conditions. It is also important that this excellent water-resistance be achieved under minimal cure conditions. Conventional starch-based adhesives generally have poor water-resistance, therefore it is desirable to prepare an adhesive for paperboard and corrugated board having improved water-resistance.

The present invention is an aqueous adhesive comprising starch and an ammonium-based latex. Preferably, the adhesive is prepared in the absence of a caustic component, such as sodium hydroxide.

Utilizing an ammonium-based latex improves the water-resistance of the adhesive and therefore, improves the wet-pin strength of the corrugated board.

The aqueous adhesive of the present invention comprises an ammonia-based latex and starch.

The starch component of the adhesive is present in an amount of from 20 to 95 dry parts, based on 100 parts of dry adhesive. More preferably, the starch is present in an amount of from 40 to 90 dry parts per 100 parts of dry adhesive. Generally, 1 to 10 parts of the starch component is cooked or gelatinized to provide for viscosity in the final adhesive. Alternatively, synthetic thickeners can be used to develop the required initial adhesive viscosity, eliminating the need to cook any of the starch.

In the preparation of the example adhesive, a minor portion of the starch is cooked by first blending with water and heating until dissolved. This primary mixture can then be added to a secondary mixture containing the latex and remaining starch component. The two mixtures are then thoroughly mixed to prepare the subject adhesive.

The latex component of the subject adhesive, which is generally added to the uncooked portion of the composition, is present in an amount of from 80 to 5 dry parts per 100 parts dry adhesive; more preferably, from 50 to 10 dry parts based on 100 parts dry adhesive. From an economic standpoint, it is more desirable to maintain the latex at as low a level as possible.

By "ammonia-based latex" is meant a polymer latex prepared in the presence of ammonium hydroxide. Normally a non-volatile base, such as sodium hydroxide, is used as a neutralent (to raise pH) during polymerization. However, for the latex used in the present latex-based adhesive, a volatile base such as ammonium hydroxide acts as the polymerization neutralent.

Typical examples of latexes which can be employed in adhesives of the present invention are styrene-butadiene latexes and carboxylated styrene-butadiene latexes similar to those disclosed in U.S. Patent 4,396,453, the difference being the present latexes are ammonium hydroxide-based rather than sodium hydroxide-based.

Employing modified styrene-butadiene latexes such as isopropenyl oxazoline-modified styrene-butadiene latex in the subject adhesive composition yields improved water-resistant characteristics as well. The oxazoline-modified polymer compositions are generally disclosed in U.S. Patents 4,508,869 and 4,474,923. U.S. patent 4,508,869 teaches that upon completion of the polymerization of the first polymer mix, the pH of the resulting coreactive latex is adjusted, such that the oxazoline ring does not significantly react or hydrolyze. Any convenient water-soluble alkaline material, e.g. NH₄OH, or NaOH may advantagesly be employed to raise the pH of the aqueous phase. This patent does not suggest any advantages at all for the use of NH₄OH over NaOH. Said oxazoline-modified polymers are disclosed to have good tensile and elongation properties and excellent resistance to water and aqueous fluids. These properties are enhanced when the latex is polymerized in the presence of ammonium hydroxide.

The functional monomer, isopropenyl oxazoline, is typically present in the latex, in an amount of from 0.25 to 10 parts per 100 parts by weight polymer latex, more preferably from 1 to 2 parts by weight per 100 parts by weight polymer latex.

In the preparation and testing of various latex-based adhesive formulations employing the starch and the ammonium-based latex, it has been found that by using ammonium hydroxide as the neutralent instead of sodium hydroxide during polymerization that wet-pin strength is substantially improved. It has also been found that post addition of ammonium hydroxide to latexes prepared with sodium hydroxide as the neutralent does not yield comparable results.

The latex-based adhesive composition of the present invention can be utilized in the production of corrugated paperboard and corrugated paperboard products such as containers. The corrugated paperboard typically comprises a fluted medium and a liner adhesively joined to the tips of the fluted medium on one or both sides thereof. (The adhesive made from the present latex is not limited to the above-described corrugated paperboard but can be used for other corrugated board construction as well.) The adhesive composition of the present invention can be applied to the fluted medium or the liner, however it is usually preferred to apply the adhesive to the tips of the fluted medium.

The adhesive can be employed in amounts of from 1 to 10 pounds (0.45 to 4.5 kg) per 1,000 square feet (93 m²) based upon the dry weight or solids weight of the adhesive. Preferably, the adhesive is employed in amounts of from 1 to 5 pounds (0.45 to 2.25 kg) per 1,000 square feet (93 m²).

Any of various paperboard substrates can be utilised in combination with the present adhesive composition in order to provide corrugated paperboard having improved wet-pin strength. The latex-based adhesive of the present invention also provides water-resistant properties. The present composition can be employed in a variety of paperboard products including wax or resin-impregnated paperboards, which would further improve the water-resistant characteristic of a corrugated paperboard product prepared with the present invention.

To further illustrate the present invention, the following examples are presented. All parts and percentages are by weight, unless indicated otherwise.

### Example 1

Into a one-gallon (3.79 l), jacketed reactor equipped with lab pumps to deliver monomer and aqueous feeds were added 1088.05 g of deionized water, 14.77 g of a one-percent active aqueous pentasodium diethylene triamine pentacetate solution, 29.53 g of itaconic acid and 26.18 g of a 39.7 percent solids seed latex containing polystyrene particles having a volume average particle size of 270Å(27 nm). The reactor was purged with nitrogen and heated to 90°C. Then, over a two-hour and 40-minutes period was added a monomer stream containing 590.63 g of styrene and 5.17 g of tertiary dodecyl mercaptan.

Beginning simultaneously with the start of the monomer stream was added a second monomer stream containing 355.0 g of butadiene over a two-hour and 40-minute period.

Beginning simultaneously with the start of each of the above monomer streams was added continuously over a five hour period, 295.3 g of deionized water, 16.41 g of a 45 percent active aqueous surfactant solution, 14.77 g of a 10 percent aqueous ammonium hydroxide solution, and 10.34 g of sodium persulfate. After three hours and over a period of five minutes was added 78.55 g of a 10 percent ammonium hydroxide solution. After three hours and 10 minutes, over a period of one hour and 20 minutes, was added another monomer stream containing 2.21 g of tertiary dodecyl mercaptan, 14.77 g of isopropylene oxazoline, 302.7 g of styrene and 184.0 g of butadiene. Following the addition of the monomer streams and aqueous streams, the reaction mixture was maintained at 90°C for one addition hour and then cooled.

### Adhesive Compound Preparation

A mixer was charged with 400 pounds (181.44 kg) of cold water. Forty-five pounds (20.41 kg) of corn starch were added and the mixture was agitated until the corn starch was dispersed. The mixture was then heated to 85°C and held at 85°C for 15 minutes with mixing to gelatinize the starch. Fifty pounds (22.68 kg) of cold water were then added to cool the mixture.

In a separate mixer, 2,000 pounds (907.2 kg) of 50 percent solids latex prepared similarly to the latex in Example 1 were added. In another smaller container, 10 pounds (4.54 kg) of 10 mol. borax were dissolved with agitation in 70 pounds (31.75 kg) of water, heated to 60°C. The solubilized borax/water mixture was added, with agitation, to the latex in the mixer. Then 665 pounds (301.64 kg) of corn starch were added and the mixture was agitated until all of the corn starch was well dispersed. Thereafter, the mixture of 45 pounds (20.41 kg) of gelatinized corn starch in 450 pounds (204.12 kg) of hot water prepared above was added slowly. Mixing was continued until a smooth, homogeneous adhesive was obtained. The resultant adhesive had a viscosity of 2,700 cps (2.7 Pa·s), as measured with a Model RVT Brookfield Viscometer at 20 RPMS.

### Example 2

Into a one-gallon (3.8 l), jacketed reactor equipped with lab pumps to deliver monomer and aqueous feed were added 1160.67 g of deionized water, 0.37 g of a 40 percent active aqueous pentasodium diethylene triamine pentacetate solution, 29.69 g of itaconic acid and 26.12 g of a 40 percent solids seed latex containing polystyrene particles having a volume average particle size of 270Å (27 nm). The reactor was purged with nitrogen and heated to 90°C. Then, over a four-hour period was added a monomer stream containing 556.60 g of butadiene.

Beginning simultaneously with the start of the butadiene monomer stream was added continuously over a four-hour and 30-minute period, a monomer stream containing 897.98 g of styrene and 7.42 g of tertiary dodecyl mercaptan. Also, beginning simultaneously with the start of the monomer streams was added continuously over a four-hour period, 296.85 g of deionized water, 30.83 g of a 33.7 percent solution of sodium persulfate, 5.30 g of a 28 percent solution of ammonium hydroxide and 15.49 g of a 45 percent active aqueous surfactant solution. Following addition of the monomer and aqueous streams, the reaction mixture was maintained at 90°C for one additional hour and then cooled.

The latex/starch adhesive was then prepared as described above and used in making a boxboard. The boxboard was then tested for wet-pin adhesion by soaking a 2 X 4 inch (50.8 x 101.6 mm) strip of boxboard in water for one hour, mounting the boxboard on an Instron machine and recording the force required to delaminate the backing from the corrugated material.

The wet-pin adhesion is shown in Table I.

### Comparative Run A

The procedure of Example 2 was followed in preparing the latex and the latex/starch adhesive with the exception that sodium hydroxide was used in the preparation of the latex instead of ammonium hydroxide. A boxboard prepared with this latex/starch adhesive was tested for wet-pin adhesion and the result is shown in Table I.

### Comparative Run B

A latex/starch adhesive was prepared as in Example 2, except that the latex used was a commercially available carboxylated styrene-butadiene copolymer latex (Dow Latex 620, The Dow Chemical Company). A boxboard was prepared with this adhesive and was tested as in example 2 for wet pin adhesion. The result is shown in Table I.

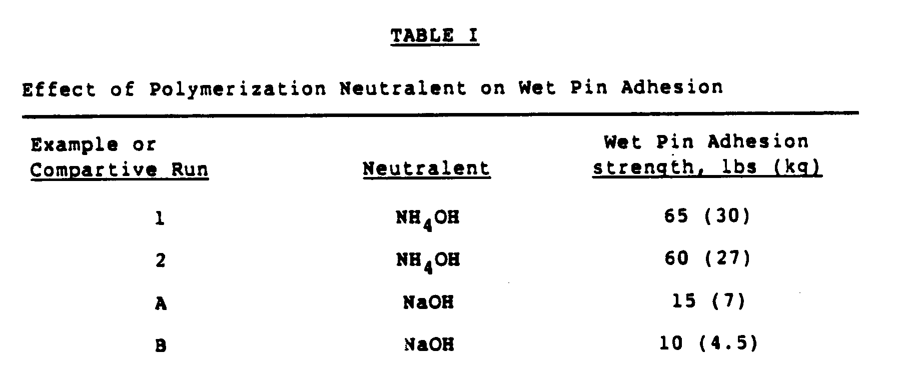

The data in Table I show that wet pin adhesion was much higher when the polymerization neutralent was ammonium hydroxide rather than sodium hydroxide.

### Comparative Run C

In order to determine the effect of post-adding NH₄OH to latexes prepared using NH₄OH or NaOH as the neutralent, NH₄OH was post-added to latexes similar to the latexes used in Example 2 and Comparative Run B. Boxboards prepared using adhesives comprising these latexes were tested for wet pin adhesion. The results are shown in Table II.

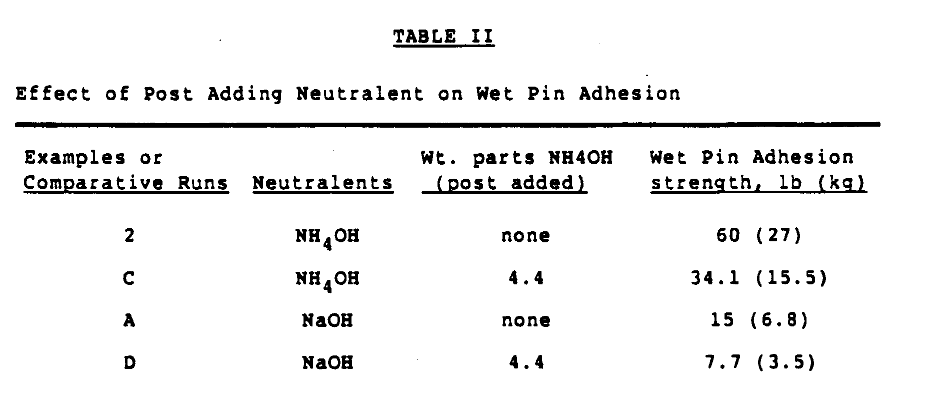

The data in Table II show that post-adding NH₄OH to a latex prepared with NaOH or NH₄OH as the neutralent did not improve with wet pin adhesion strength of the boxboard. (Compare Comparative Run A with Comparative Run D and Example 2 with Comparative Run C.)

## Claims

1. An aqueous adhesive comprising:
(a) starch; and
(b) a polymer latex prepared in the presence of ammonium hydroxide,
said starch is present in an amount of from 20 to 95 dry parts per hundred parts dry adhesive and said latex is present in an amount of from 80 to 5 dry parts per hundred parts dry adhesive.

2. An adhesive as claimed in Claim 1 wherein said latex is an isopropenyl-2-oxazoline-modified latex.

3. An adhesive as claimed in Claim 1 or 2, wherein said latex is selected from the group consisting of styrene-butadiene latex or carboxylated styrene-butadiene latex.

4. An adhesive as claimed in Claim 1-3, wherein said latex is an isopropenyl-2-oxazoline-modified styrene-butadiene latex.

5. An adhesive as claimed in Claim 4 wherein said isopropenyl-2-oxazoline is present in an amount of from 0.25 to 10 parts by weight based on 100 parts polymer latex.

6. An adhesive as claimed in Claim 7 wherein said isopropenyl-2-oxazoline is present in an amount of from 1 to 2 parts by weight based on 100 parts polymer latex.

7. A method for adhesively bonding two adjoining surfaces of a fluted medium and a liner of a paperboard which comprises applying to the tips of the fluted medium an aqueous corrugating adhesive according to any one of the claims 1-6.

8. Corrugated paperboard having improved wettin strength comprising a fluted medium and a liner adhesively joint to the tips of the fluted medium on one or both sides thereof, using an adhesive according to any one of the claims 1-6.

9. Process for the preparation of the adhesive according to any one of the claims 1-6, comprising blending a minor portion of the starch with water and heating until dissolved; adding the thus obtained primary mixture to a secondary mixture containing the latex and remaining starch component; thoroughly mixing the two mixtures.

## Patentansprüche

1. Wäßriger Klebstoff, enthaltend
(a) Stärke und
(b) einen Polymerlatex, der in Gegenwart von Ammoniumhydroxid hergestellt ist,
wobei die Stärke in einer Menge von 20-95 trockenen Teilen auf 100 Teile trockener Klebstoff und der Latex in einer Menge von 80-5 trockenen Teilen pro hundert Teile trockener Klebstoff vorhanden sind.

2. Klebstoff nach Anspruch 1,
**dadurch gekennzeichnet,**
daß der Latex ein mit Isopropenyl-2-oxazolin modifizierter Latex ist.

3. Klebstoff nach Anspruch 1 oder 2,
**dadurch gekennzeichnet,**
daß der Latex aus der aus Styrol-Butadienlatex oder carboxyliertem Styrol-Butadienlatex bestehenden Gruppe ausgewählt ist.

4. Klebstoff nach Anspruch 1-3,
**dadurch gekennzeichnet,**
daß der Latex ein mit Isopropenyl-2-oxazolin modifizierter Styrol-Butadienlatex ist.

5. Klebstoff nach Anspruch 4,
**dadurch gekennzeichnet,**
daß das Isopropenyl-2-oxazolin in einer Menge von 0,25-10 Gewichtsteilen pro 100 Teile Polymerlatex vorhanden ist.

6. Klebstoff nach Anspruch 4,
**dadurch gekennzeichnet,**
daß das Isopropenyl-2-oxazolin in einer Menge von 1-2 Gewichtsteilen pro 100 Teile Polymerlatex vorhanden ist.

7. Verfahren zum Verkleben von zwei benachbarten Oberflächen eines gewellten Mediums und einer Kartondecke durch Aufbringen eines wäßrigen Wellpappenklebstoffes nach jedem der Ansprüche 1-6 auf die Spitzen der Welle.

8. Wellpappe mit verbesserter Naßfestigkeit der Verbindungstellen zwischen Welle und Decken mit einer Welle und einer Klebbindung an den Spitzen der Welle mit einer Dekke auf einer oder beiden Seiten der Welle unter Verwendung eines Klebstoffes nach jedem der Ansprüche 1-6.

9. Verfahren zum Herstellen eines Klebstoffes nach jedem der Ansprüche 1-6 durch Mischen eines kleinen Teils Stärke mit Wasser und Erwärmen bis zum Auflösen, Zugeben der auf diese Weise erhaltenen ersten Mischung zu einer zweiten Mischung, die den Latex und den verbleibenden Stärkebestandteil enthält, und Durchmischen der beiden Mischungen.

## Revendications

1. Adhésif aqueux comprenant :
a) de l'amidon, et
b) un latex de polymère, préparé en présence d'hydroxyde d'ammonium,
l'amidon étant présent à raison de 20 à 95 parties d'amidon sec pour 100 parties d'adhésif sec, et le latex étant présent à raison de 80 à 5 parties de latex sec pour 100 parties d'adhésif sec.

2. Adhésif conforme à la revendication 1, dans lequel le latex est un latex modifié avec de l'isopropényl-2-oxazoline.

3. Adhésif conforme à la revendication 1 ou 2, dans lequel le latex est choisi dans le groupe constitué par un latex de styrène-butadiène et un latex de styrène-butadiène carboxylé.

4. Adhésif conforme à l'une des revendications 1 à 3, dans lequel le latex est un latex de styrène-butadiène modifié avec de l'isopropényl-2-oxazoline.

5. Adhésif conforme à la revendication 4, dans lequel l'isopropényl-2-oxazoline est présente à raison de 0,25 à 10 parties en poids pour 100 parties de latex de polymère.

6. Adhésif conforme à la revendication 5, dans lequel l'isopropényl-2-oxazoline est présente à raison de 1 à 2 parties en poids pour 100 parties de latex de polymère.

7. Procédé pour coller par adhésion deux surfaces jointes d'un papier cannelé et d'une doublure de carton, qui comporte le fait d'appliquer, sur les crêtes du papier cannelé, un adhésif aqueux pour carton ondulé, conforme à l'une des revendications 1 à 6.

8. Carton ondulé présentant une résistance améliorée au décollement à l'état mouillé, comprenant un papier cannelé et une doublure collée aux crêtes du papier cannelé, sur un côté de celui-ci ou sur les deux, à l'aide d'un adhésif conforme à l'une des revendications 1 à 6.

9. Procédé de préparation d'un adhésif conforme à l'une des revendications 1 à 6, comportant le fait de mélanger une portion mineure de l'amidon avec de l'eau et de chauffer le tout jusqu'à dissolution, le fait d'ajouter le premier mélange ainsi obtenu à un second mélange contenant le latex et le reste de l'amidon, et le fait de mélanger soigneusement ces deux mélanges.
